(19)

Europäisches
Patentamt
European
Patent Office
Office européen
des brevets

(11) **EP 3 974 859 A2**

(12) # EUROPEAN PATENT APPLICATION

(43) Date of publication:
**30.03.2022 Bulletin 2022/13**

(21) Application number: **21198567.6**

(22) Date of filing: **23.09.2021**

(51) International Patent Classification (IPC):
**G01S 3/04** *(2006.01)*

(52) Cooperative Patent Classification (CPC):
**G01S 3/043**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.09.2020 US 202017035573**

(71) Applicant: **SHENZHEN GOODIX TECHNOLOGY
CO., LTD.
Shenzhen, Guangdong 518045 (CN)**

(72) Inventors:
• **RANJBAR, Mohammad**
**San Diego, CA (US)**
• **DEZFOOLIYAN, Amir**
**San Diego, CA (US)**
• **YOUNIS, Waleed**
**San Diego, CA (US)**

(74) Representative: **Dr. Gassner & Partner mbB
Wetterkreuz 3
91058 Erlangen (DE)**

(54) **AOA/AOD CALCULATION WITH LOW ANGLE OF INCIDENCE**

(57)    One inventive aspect is a receiver circuit. The receiver circuit includes a controller selecting a receiver antenna array and/or a transmit antenna array. The controller also calculates a first AoA and/or a first AoD based on signals from the selected receiver and/or transmit antenna array. The controller also, in response to the absolute value of the first AoA minus $\pi/2$ not being less than or equal to the AoA threshold angle, selects a different receiver antenna array, and calculates a second AoA based on digitized samples of RF signals from the selected different receiver antenna array. The controller also, in response to the absolute value of the first AoD minus $\pi/2$ not being less than or equal to the AoD threshold angle, selects a different transmit antenna array, and calculates a second AoD based on digitized samples of RF signals from the selected different transmit antenna array.

FIG. 1B

EP 3 974 859 A2

**Description**

**TECHNICAL FIELD**

The subject matter described herein relates to determining Angle of Arrival (AoA) or Angle of Departure (AoD), and more particularly to determining AoA or AoD accurately despite low angles of incidence.

**BACKGROUND**

RF signals may be transmitted from a transmitter with an Angle of Departure (AoD) and/or received at a receiver circuit based with an Angle of Arrival (AoA), where the AoA/AoD may be any angle. Accordingly, the AoA/AoD are sometimes angles which are sufficiently oblique as to be difficult to measure accurately. Techniques for accurately calculating AoA or AoD for highly oblique angles is needed in the art.

**SUMMARY**

One inventive aspect is a receiver circuit. The receiver circuit includes one or more receiver antennas or one or more receiver antenna arrays configured to receive a plurality of RF signals transmitted from a transmitter circuit including one or more transmit antennas or one or more transmit antenna arrays. The receiver circuit also includes one or more RF chains configured to generate a plurality of digitized samples of the received RF signals, and a controller configured to select at least one of a particular receiver antenna array and a particular transmit antenna array, and to at least one of calculate a first angle of arrival (AoA) based on digitized samples of RF signals from the selected particular receiver antenna array, and calculate a first angle of departure (AoD) based on digitized samples of RF signals from the selected particular transmit antenna array. The controller is further configured to at least one of determine whether the absolute value of the first AoA minus $\pi/2$ is less than or equal to an AoA threshold angle, and determine whether the absolute value of the first AoD minus $\pi/2$ is less than or equal to an AoD threshold angle. The controller is further configured to, in response to the absolute value of the first AoA minus $\pi/2$ not being less than or equal to the AoA threshold angle select a different receiver antenna array, and calculate a second AoA based on digitized samples of RF signals from the selected different receiver antenna array. The controller is further configured to, in response to the absolute value of the first AoD minus $\pi/2$ not being less than or equal to the AoD threshold angle select a different transmit antenna array, and calculate a second AoD based on digitized samples of RF signals from the selected different transmit antenna array.

In some embodiments, the AoD threshold angle is equal to $1/2\ \pi/(2(N-1))$, where N is equal to the number of transmit antenna arrays of the transmitter circuit, and where the AoA threshold angle is equal to $1/2\ \pi/(2(M-1))$, where M is equal to the number of receiver antenna arrays of the receiver circuit.

In some embodiments, N = 2.

In some embodiments, M = 2.

In some embodiments, at least one of N and M is greater than 2.

In some embodiments, the controller is further configured to, in response to the absolute value of the first AoA minus $\pi/2$ not being less than or equal to the AoA threshold angle determine whether the absolute value of the second AoA minus $\pi/2$ is less than or equal to the AoA threshold angle, and in response to the absolute value of the second AoA minus $\pi/2$ being less than or equal to the AoA threshold angle, calculate an estimated AoA based on the second AoA.

In some embodiments, calculating the estimated AoA based on the second AoA includes calculating one or more additional AoAs based on digitized samples of RF signals from the selected different receiver antenna array, and calculating the estimated AoA based on an average of the second and the additional AoAs.

In some embodiments, the controller is further configured to, in response to the absolute value of the first AoD minus $\pi/2$ not being less than or equal to the AoD threshold angle determine whether the absolute value of the second AoD minus $\pi/2$ is less than or equal to the AoD threshold angle, and in response to the absolute value of the second AoD minus $\pi/2$ being less than or equal to the AoD threshold angle, calculate an estimated AoD based on the second AoD.

In some embodiments, calculating the estimated AoD based on the second AoD includes calculating one or more additional AoDs based on digitized samples of RF signals from the selected different transmit antenna array, and calculating the estimated AoD based on an average of the second and the additional AoDs.

In some embodiments, determining whether the absolute value of the first AoA minus $\pi/2$ is less than or equal to the AoA threshold angle includes determining whether the particular receiver antenna array is more perpendicular to the transmitter circuit than any other receiver antenna array of the receiver circuit, and determining whether the absolute value of the first AoD minus $\pi/2$ is less than or equal to the AoD threshold angle includes determining whether the particular transmit antenna array is more perpendicular to the receiver circuit than any other transmit antenna array of the transmitter circuit.

Another inventive aspect is a method of using a receiver circuit. The method includes, with one or more receiver antennas or one or more receiver antenna arrays, receiving a plurality of RF signals transmitted from a transmitter circuit including one or more transmit antennas or one or more transmit antenna arrays. The method also includes, with one or more RF chains, generating a plurality of digitized samples of the received RF signals, and with a controller, selecting at least one of a particular receiver antenna array and a particular transmit antenna array. The method also includes at least one of: A) calculating a first angle of arrival (AoA) based on digitized samples of RF signals from the selected particular receiver antenna array, and B) calculating a first angle of departure (AoD) based on digitized samples of RF signals from the selected particular transmit antenna array. The method also includes, with the controller, at least one of: A) determining whether the absolute value of the first AoA minus $\pi/2$ is less than or equal to an AoA threshold angle, and B) determining whether the absolute value of the first AoD minus $\pi/2$ is less than or equal to an AoD threshold angle. The method also includes, with the controller, in response to the absolute value of the first AoA minus $\pi/2$ not being less than or equal to the AoA threshold angle selecting a different receiver antenna array, and calculating a second AoA based on digitized samples of RF signals from the selected different receiver antenna array The method also includes, with the controller, in response to the absolute value of the first AoD minus $\pi/2$ not being less than or equal to the AoD threshold angle selecting a different transmit antenna array, and calculating a second AoD based on digitized samples of RF signals from the selected different transmit antenna array.

In some embodiments, the AoD threshold angle is equal to $1/2\ \pi/(2(N-1))$, where N is equal to the number of transmit antenna arrays of the transmitter circuit, and where the AoA threshold angle is equal to $1/2\ \pi/(2(M-1))$, where M is equal to the number of receiver antenna arrays of the receiver circuit.

In some embodiments, N = 2.

In some embodiments, M = 2.

In some embodiments, at least one of N and M is greater than 2.

In some embodiments, the method further includes, with the controller, in response to the absolute value of the first AoA minus $\pi/2$ not being less than or equal to the AoA threshold angle, determining whether the absolute value of the second AoA minus $\pi/2$ is less than or equal to the AoA threshold angle, and, in response to the absolute value of the second AoA minus $\pi/2$ being less than or equal to the AoA threshold angle, calculating an estimated AoA based on the second AoA.

In some embodiments, calculating the estimated AoA based on the second AoA includes calculating one or more additional AoAs based on digitized samples of RF signals from the selected different receiver antenna array, and calculating the estimated AoA based on an average of the second and the additional AoAs.

In some embodiments, the method further includes, with the controller, in response to the absolute value of the first AoD minus $\pi/2$ not being less than or equal to the AoD threshold angle, determining whether the absolute value of the second AoD minus $\pi/2$ is less than or equal to the AoD threshold angle, and, in response to the absolute value of the second AoD minus $\pi/2$ being less than or equal to the AoD threshold angle, calculating an estimated AoD based on the second AoD.

In some embodiments, calculating the estimated AoD based on the second AoD includes calculating one or more additional AoDs based on digitized samples of RF signals from the selected different transmit antenna array, and calculating the estimated AoD based on an average of the second and the additional AoDs.

In some embodiments, determining whether the absolute value of the first AoA minus $\pi/2$ is less than or equal to the AoA threshold angle includes determining whether the particular receiver antenna array is more perpendicular to the transmitter circuit than any other receiver antenna array of the receiver circuit, and determining whether the absolute value of the first AoD minus $\pi/2$ is less than or equal to the AoD threshold angle includes determining whether the particular transmit antenna array is more perpendicular to the receiver circuit than any other transmit antenna array of the transmitter circuit.

## BRIEF DESCRIPTION OF DRAWINGS

The accompanying drawings, which are incorporated in and constitute a part of this specification, show certain aspects of the subject matter disclosed herein and, together with the description, help explain some of the principles associated with the disclosed implementations.

Figure 1A is a schematic diagram of an embodiment of a transmitter circuit according to an embodiment.
Figure 1B is a schematic diagram of an embodiment of a receiver circuit according to an embodiment.
Figure 2A is a schematic diagram of a two antenna system illustrating AoA.
Figure 2B is a schematic diagram of two antenna systems illustrating AoD.
Figure 3 is a schematic diagram of an antenna array system illustrating AoA for first and second received RF signals.
Figure 4 is a graphic illustration of AoA or AoD measurement sensitivity to measured phase difference of RF signal samples used to calculate AoA or AoD.

Figure 5 is a graphic illustration of a two array antenna system which may be used to calculate AoA.
Figure 6 is a flowchart illustrating a method of calculating AoA or AoD.
Figure 7 is a flowchart illustrating a method of calculating AoA or AoD.

When practical, similar reference numbers denote similar structures, features, or elements.

## DESCRIPTION OF EMBODIMENTS

Particular embodiments of the invention are illustrated herein in conjunction with the drawings.

Various details are set forth herein as they relate to certain embodiments. However, the invention can also be implemented in ways which are different from those described herein. Modifications can be made to the discussed embodiments by those skilled in the art without departing from the invention. Therefore, the invention is not limited to particular embodiments disclosed herein.

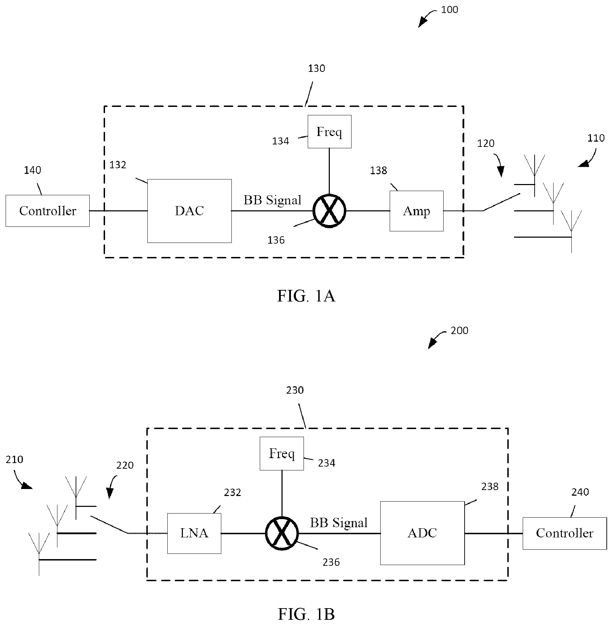

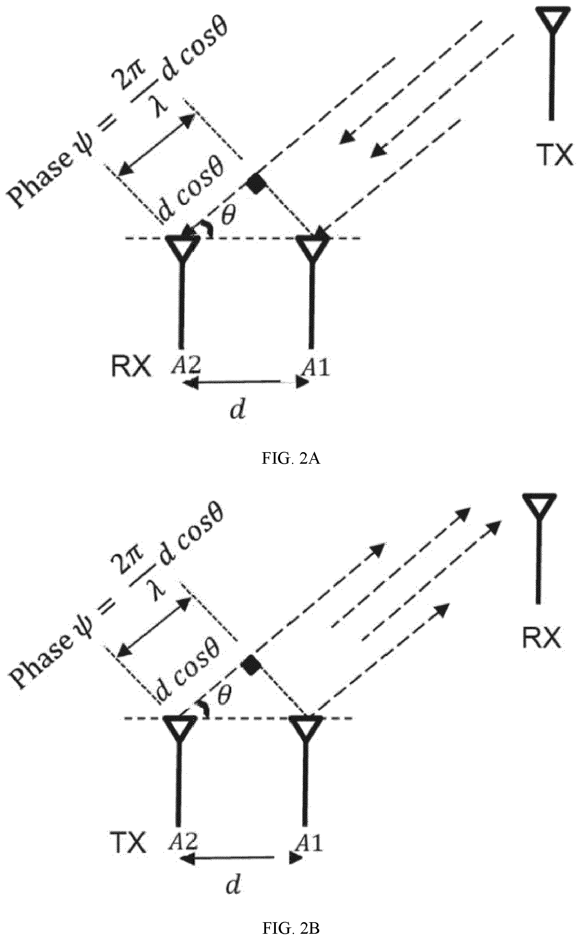

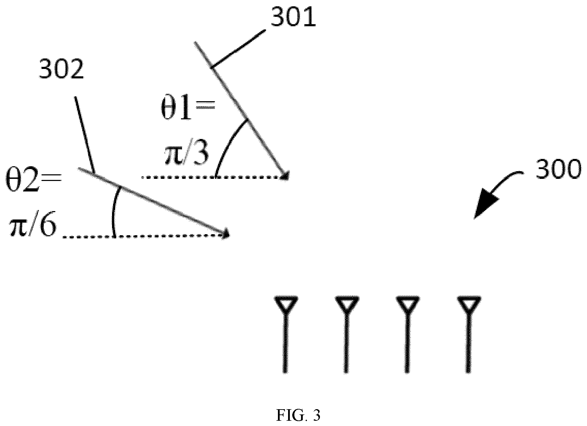

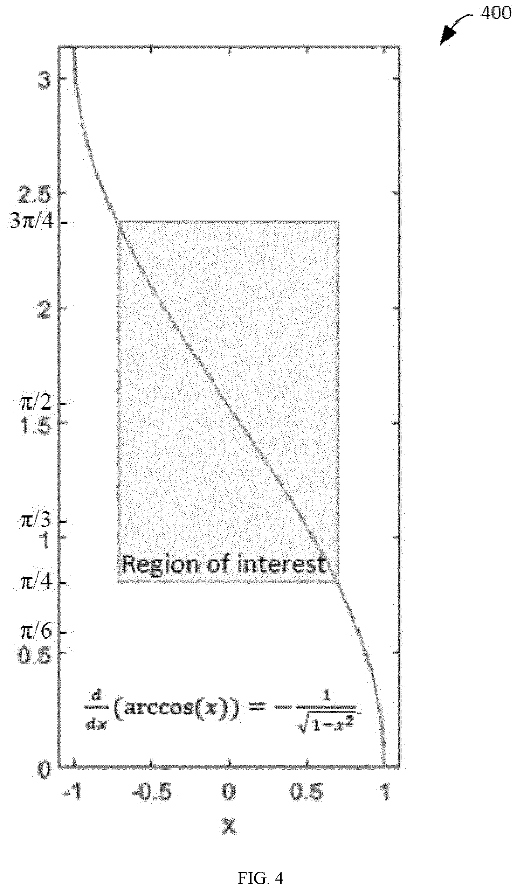

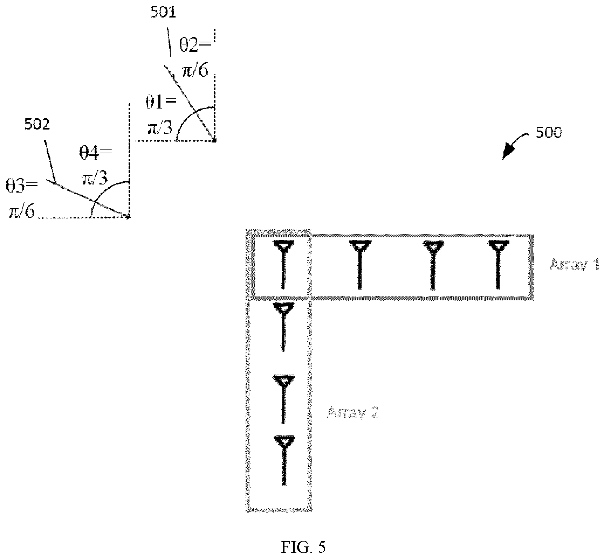

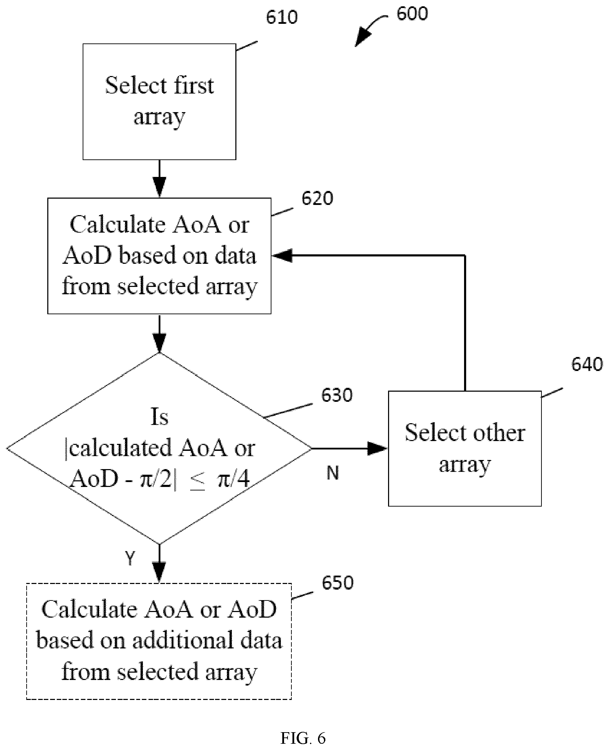

Embodiments illustrate circuits and methods for determining a measured angle of departure (AoD) of an RF signal transmitted by a transmitter circuit with an antenna system having at least two antenna arrays or for determining a measured angle of arrival (AoA) of an RF signal received at a receiver circuit with an antenna system having at least two antenna arrays. The AoA or AoD is determined at a receiver circuit based on a number of digitized samples of the RF signal. Because AoA or AoD calculation accuracy is sensitive to the AoA or AoD, the AoA or AoD is calculated based on digitized samples of the RF signal either transmitted by the antenna array of the transmitter circuit more perpendicular to the receiver circuit or is calculated based on digitized samples of the RF signal received by the antenna array of the receiver circuit more perpendicular to the transmitter circuit. Figures 1A and 1B respectively illustrate schematic diagrams of a receiver circuit and a transmitter circuit. Figures 2A and 2B respectively illustrate AoA and AoD. Figures 3 and 4 illustrate AoA or AoD measurement sensitivity to AoA or AoD. Figures 5 and 6 illustrate a two array antenna system and a method of calculating AoA or AoD.

Figure 1A is a schematic diagram of an embodiment of a transmitter circuit 100 according to an embodiment. Transmitter circuit 100 includes antenna or antenna array 110, switch 120, RF chain 130, and controller 140. Transmitter circuit 100 illustrates a particular example. Other embodiments of transmitter circuits may be used.

Antenna or antenna array 110 may be any antenna or antenna array. For example, in some embodiments, antenna or antenna array 110 includes 1, 2, 3, 4, or more antennas. In some embodiments, antenna or antenna array 110 includes a linear antenna array. In some embodiments, antenna or antenna array 110 includes a two dimensional antenna array, for example, having multiple rows of linear antenna arrays, or, for example, having a single row of antennas forming a first antenna array and a single column of antennas forming a second antenna array.

In embodiments where antenna or antenna array 110 includes one antenna, the one antenna may be connected directly to RF chain 130, and switch 120 may be omitted. In embodiments where antenna or antenna array 110 includes multiple antennas, each antenna may be directly connected to a separate RF chain. Each of the RF chains may have the features of RF chain 130. Alternatively, in some embodiments where antenna or antenna array 110 includes multiple antennas, as illustrated, each of the antennas may be selectively connected one at a time to a single RF chain.

Antenna or antenna array 110 may be configured to transmit RF signals to a receiver circuit, such as receiver circuit 200 described below with reference to figure 1B. The RF signals include a high frequency signal at a carrier frequency modulated with a low frequency information signal. The high frequency signal is transmitted by one of the antennas from antenna or antenna array 110, for example, according to a programmable electrical connection formed by switch 120, as controlled by controller 140. The RF signals transmitted by antenna or antenna array 110 are transmitted from transmitter 100 with an AoD, as understood by those of skill in the art.

Controller 140 is configured to provide a digital signal to RF chain 130, where the digital signal encodes the information signal to be transmitted by antenna or antenna array 110.

RF chain 130 includes digital to analog converter (DAC) 132, mixer 136, frequency synthesizer 134, and power amplifier (PA) 138. RF chain 130 is an example only, and embodiments of other RF chains may alternatively be used. For example, in some embodiments, one or more amplifiers, and/or filters may be included, as understood by those of skill in the art.

The digital signal is processed by the digital to analog converter 132 to generate an analog baseband signal representing the digital signal, using techniques known in the art. Various digital to analog converter structures known in the art may be used.

Mixer 136 receives the analog baseband signal output from the digital to analog converter 132 and an oscillator signal at a carrier frequency generated by frequency synthesizer 134. In response to the analog baseband signal and the oscillator signal, mixer 136 up converts the analog baseband signal from the analog-to-digital converter 132 to a high frequency signal, using techniques known in the art. Various mixer structures known in the art may be used. The resulting high frequency signal is at the carrier frequency and is modulated so as to include the information of the low frequency information signal.

Power amplifier 138 is configured to receive the high frequency signal, and the high frequency signal is driven to one of the antennas from antenna or antenna array 110, for example, according to a programmable electrical connection formed by switch 120, as controlled by controller 140. The power amplifier 138 drives the high frequency signal to one of the antennas using techniques known in the art. Various power amplifier structures known in the art may be used.

As understood by those of skill in the art, using communication connectivity not illustrated in figure 1A, control signals from controller 140 may control certain variable functionality of switch 120, power amplifier 138, frequency synthesizer 134, mixer 136, and digital to analog converter 132, for example, as understood by those of skill in the art.

The control signals from controller 140 may, for example, control switch 120 to control which of multiple antennas RF chain 130 drives the high frequency signal with.

In embodiments having multiple antennas each connected to one of multiple RF chains, controller 140 may generate control signals for each of the RF chains.

Figure 1B is a schematic diagram of an embodiment of a receiver circuit 200 according to an embodiment. Receiver circuit 200 includes antenna or antenna array 210, switch 220, RF chain 230, and controller 240. Receiver circuit 200 illustrates a particular example. Other embodiments of receiver circuits may be used.

Antenna or antenna array 210 may be any antenna or antenna array. For example, in some embodiments, antenna or antenna array 210 includes 1, 2, 3, 4, or more antennas. In some embodiments, antenna or antenna array 210 includes a linear antenna array. In some embodiments, antenna or antenna array 210 includes a two dimensional antenna array, for example, having multiple rows of linear antenna arrays, or, for example, having a single row of antennas forming a first antenna array and a single column of antennas forming a second antenna array.

In embodiments where antenna or antenna array 210 includes one antenna, the one antenna may be connected directly to RF chain 230, and switch 220 may be omitted. In embodiments where antenna or antenna array 210 includes multiple antennas, each antenna may be directly connected to a separate RF chain. Each of the RF chains may have the features of RF chain 230. Alternatively, in some embodiments where antenna or antenna array 210 includes multiple antennas, as illustrated, each of the antennas may be selectively connected one at a time to a single RF chain.

Antenna or antenna array 210 may be configured to receive RF signals generated by a transmitter, such as transmitter 100 described above with reference to figure 1A. The RF signals received by antenna or antenna array 210 are received from a transmitter, such as transmitter 100 with an AoA, as understood by those of skill in the art.

RF chain 230 includes low noise amplifier (LNA) 232, frequency synthesizer 234, mixer 236, and analog to digital converter (ADC) 238. RF chain 230 is an example only, and embodiments of other RF chains may alternatively be used. For example, in some embodiments, one or more amplifiers, and/or filters may be included, as understood by those of skill in the art.

Low noise amplifier 232 is configured to receive a high frequency signal at a carrier frequency and modulated with a low frequency information signal. The high frequency signal is received from one of the antennas from antenna or antenna array 210, for example, according to a programmable electrical connection formed by switch 220, as controlled by controller 240. The high frequency signal is amplified by low noise amplifier 232 to generate an amplified RF signal, using techniques known in the art. Various low noise amplifier structures known in the art may be used.

Mixer 236 receives the amplified RF signal output from the low noise amplifier 232 and an oscillator signal at or substantially at the carrier frequency generated by frequency synthesizer 234. In response to the amplified RF signal and the oscillator signal, mixer 236 down converts the amplified RF signal from the low noise amplifier 232 to a baseband signal, using techniques known in the art. Various mixer structures known in the art may be used. The resulting baseband signal includes information of the low frequency information signal.

The baseband signal is then processed by the analog-to-digital converter 238 to generate a digital signal representing the baseband signal, using techniques known in the art. Various analog-to-digital converter structures known in the art may be used.

Controller 240 receives the digital representation of the baseband signal.

As understood by those of skill in the art, using communication connectivity not illustrated in figure 1B, control signals from controller 240 may control certain variable functionality of switch 220, low noise amplifier 232, frequency synthesizer 234, mixer 236, and analog-to-digital converter 238, for example, as understood by those of skill in the art.

The control signals from controller 240 may, for example, control switch 220 to select which of multiple antennas RF chain 230 receives the high frequency signals from.

For example, controller 240 may generate control signals which result in controller 240 receiving a group of digital signals, where each digital signal of the group is generated by RF chain 230 based on a high frequency signal received by a selected one of the antennas. In embodiments having multiple antennas each connected to one of multiple RF chains, controller 240 may generate control signals for each of the RF chains, such that controller 240 receives a group of digital signals, where each digital signal of the group is generated by one of the RF chains based on an RF signal received by the particular antenna connected thereto. Using techniques described below, controller 240 is configured to store the group of digital signals in a memory, and to determine an AoA or AoD for the received RF signals based on the group of digital signals it receives.

Figure 2A is a schematic diagram illustrating the geometry of phase-based estimation of angle of arrival (AoA) of an RF signal received at an antenna array comprising antenna A1 and antenna A2.

As shown, the transmitted RF signal is received at an angle of arrival (AoA) θ at antennas A1 and A2. According to geometric and trigonometric principles understood by those of skill in the art,

$$AoA = \theta = arccos\left(\frac{\lambda\psi}{2\pi d}\right)$$

*, where*

$\lambda$ =wavelength of the RF signal,
$\psi$ =the phase difference between the signals arrival at antennas A1 and A2, and
d =distance between antennas A1 and A2.

Using techniques known to those of skill in the art, a controller, such as controller 240 of receiver circuit 200 of figure 1B, may calculate AoA.

For example, an embodiment of receiver circuit 200 having one RF chain for each of antennas A1 and A2, assuming no carrier frequency offset, may calculate AoA as follows:

For transmitted signal $e^{-i2\pi f_h t_1} e^{-i2\pi f_l t_1}$,
where:

$f_h$ = the carrier frequency,
$t_1$ = the time of the transmitter oscillator,
$f_l$ = the baseband frequency,

the signal sample received at antenna A1 is $e^{-i2\pi f_h t_1} e^{-i2\pi f_l t_1} e^{i\varphi_1}$ ,
where:

$\varphi_1$ = the signal phase of the received sample; and
the signal sample received at antenna A2 is $e^{-i2\pi f_h t_1} e^{-i2\pi f_l t_1} e^{i\varphi_2}$

where:
$\varphi_2$= the signal phase of the received sample.

The downconverted sample received at antenna A1 is:

$$e^{i2\pi f_h\, t_2}\, e^{-i2\pi f_h\, t_1}\, e^{-i2\pi f_l\, t_1}\, e^{i\,\varphi_1} =$$

$$e^{-i2\pi f_h\,(t_1 - t_2)} e^{-i2\pi f_l\, t_1}\, e^{i\,\varphi_1},$$

where:
$t_2$= the time of the receiver oscillator.

The downconverted sample received at antenna A2 is:

$$e^{i2\pi f_h\, t_2}\, e^{-i2\pi f_h\, t_1}\, e^{-i2\pi f_l\, t_1}\, e^{i\,\varphi_2} =$$

$$e^{-i2\pi f_h\,(t_1 - t_2)}\, e^{-i2\pi f_l\, t_1}\, e^{i\,\varphi_2}\;.$$

The phase difference is:

$$\left(-2\pi f_h\,(t_1 - t_2) - 2\pi f_l\, t_1 + \varphi_2\right) - \left(-2\pi f_h\,(t_1 - t_2) - 2\pi f_l\, t_1 + \varphi_1\right)$$

$$=\varphi_2 - \varphi_1.$$

$$AoA = \theta = arccos\left(\frac{\lambda(\varphi_2-\varphi_1)}{2\pi d}\right)$$ , as discussed above.

Alternatively, an embodiment of receiver circuit 200 having one RF chain for both antennas A1 and A2, assuming no carrier frequency offset, may calculate AoA as follows:

For transmitted signal $e^{-i2\pi f_h t_1}e^{-i2\pi f_l t_1}$ ,

where:

$f_h$ = the carrier frequency,
$t_1$ = the time of the transmitter oscillator,
$f_l$ = the baseband frequency,

the signal received at antenna A1 is $e^{-i2\pi f_h t_1}e^{-i2\pi f_l t_1}$ ,

where:

$\varphi_1$ = the signal phase of the received sample; and
the signal received at antenna A2 is $e^{-i2\pi f_h t_1}e^{-i2\pi f_l t_1}e^{i\varphi_2}$,

where:

$\varphi_2$ = the signal phase of the received sample, and
$T$ = the sampling period.

The downconverted sample received at antenna A1 is:

$$e^{i2\pi f_h\, t_2}\, e^{-i2\pi f_h\, t_1}\, e^{-i2\pi f_l\, t_1}\, e^{i\,\varphi_1} =$$

$$e^{-i2\pi f_h\,(t_1-t_2)}e^{-i2\pi f_l\, t_1}\, e^{i\,\varphi_1},$$

where:

$t_2$ = the time of the receiver oscillator.

The downconverted sample received at antenna A2 is:

$$e^{i2\pi f_h\,(t_2+T)}\, e^{-i2\pi f_h\,(t_1+T)}\, e^{-i2\pi f_l\,(t_1+T)}\, e^{i\,\varphi_2} =$$

$$e^{-i2\pi f_h\,(t_1-t_2)}\, e^{-i2\pi f_l\,(t_1+T)}\, e^{i\,\varphi_2}.$$

The phase difference is:

$$(-2\pi f_h\,(t_1-t_2) - 2\pi f_l\,(t_1+T) + \varphi_2) - (-2\pi f_h\,(t_1-t_2) - 2\pi f_l\, t_1 + \varphi_1)$$

$$= -2\pi f_l\, T + \varphi_2 - \varphi_1.$$

Therefore,

$$\varphi_2 - \varphi_1 = (-2\pi f_h\,(t_1-t_2) - 2\pi f_l\,(t_1+T) + \varphi_2) -$$

$$(-2\pi f_h\,(t_1-t_2) - 2\pi f_l\, t_1 + \varphi_1) + 2\pi f_l\, T.$$

Accordingly, the phase difference for calculating AoA ($\varphi_2 - \varphi_1$) is equal to the phase difference measured +
$2\pi f_l\, T.$ $$AoA = \theta = arccos\left(\frac{\lambda(\varphi_2-\varphi_1)}{2\pi d}\right)$$ , as discussed above.

Figure 2B is a schematic diagram illustrating the geometry of phase-based estimation of angle of departure (AoD) of an RF signal transmitted by an antenna array comprising antenna A1 and antenna A2.

As shown, the RF signal is transmitted at an angle of departure (AoD) θ from antennas A1 and A2. According to geometric and trigonometric principles understood by those of skill in the art,

$$AoD = \theta = arccos\left(\frac{\lambda\psi}{2\pi d}\right),$$

$\lambda$ =wavelength of the RF signal transmitted from antennas A1 and A2,
$\psi$ = a phase difference between signals received from antennas A1 and A2, and
*d = distance between antennas* A1 *and A2.*

Using techniques known to those of skill in the art, a controller, such as controller 240 of receiver circuit 200 of figure 1B, may calculate AoD.

For example, an embodiment of receiver circuit 200 may calculate AoD as follows:
For signals respectively transmitted from antennas A1 and A2: $e^{-i2\pi f_h t_1}e^{-i2\pi f_l t_1}$ and , and $e^{-i2\pi f_h(t_1+T)}e^{-i2\pi f_l t_1+T)}$ , where:

$f_h$ = the carrier frequency,
$t_1$= the time of the transmitter oscillator
$f_l$ = the baseband frequency,

the first sample received at antenna RX is $e^{-i2\pi f_h t_1}e^{-i2\pi f_l t_1}$ , $e^{i\varphi 1}$
where:
$\varphi_1$ = the signal phase of the first sample; and
the second sample received at antenna RX is $e^{-i2\pi f_h t_1}e^{-i2\pi f_l t_1}$ , $e^{i\varphi 2}$,
where:

$\varphi_2$= the signal phase of the second sample, and
$T$= the sampling period.

The downconverted first sample is:

$$e^{i2\pi f_h\, t_2}\, e^{-i2\pi f_h\, t_1}\, e^{-i2\pi f_l\, t_1}\, e^{i\,\varphi_1} =$$

$$e^{-i2\pi f_h\,(t_1-t_2)}e^{-i2\pi f_l\, t_1}\, e^{i\,\varphi_1},$$

where:
$t_2$= the time of the receiver oscillator.

The downconverted second sample is:

$$e^{i2\pi f_h\,(t_2+T)}\, e^{-i2\pi f_h\,(t_1+T)}\, e^{-i2\pi f_l\,(t_1+T)}\, e^{i\,\varphi_2} =$$

$$e^{-i2\pi f_h\,(t_1-t_2)}\, e^{-i2\pi f_l\,(t_1+T)}\, e^{i\,\varphi_2}.$$

The phase difference is:

$$(-2\pi f_h\,(t_1-t_2) - 2\pi f_l\,(t_1+T) + \varphi_2) - (-2\pi f_h\,(t_1-t_2) - 2\pi f_l\, t_1 + \varphi_1)$$

$$= -2\pi f_l\, T + \varphi_2 - \varphi_1.$$

Therefore,

$$\varphi_2 - \varphi_1 = (-2\pi f_h\,(t_1-t_2) - 2\pi f_l\,(t_1+T) + \varphi_2) - (-2\pi f_h\,(t_1 -$$

$$t_2) - 2\pi f_l\, t_1 + \varphi_1) + 2\pi f_l\, T.$$

Accordingly, the phase difference for calculating AoD ($\varphi_2 — \varphi_1$) is equal to the phase difference measured

$$AoD = \theta = arccos\left(\frac{\lambda(\varphi_2-\varphi_1)}{2\pi d}\right)$$

$+2\pi f_l\, T.$ , as discussed above.

Figure 3 is a schematic diagram of an antenna array system 300 illustrating AoA for first and second received RF signals 301 and 302. As illustrated, RF signal 301 is received at antenna array system 300 with an AoA θ1 equal to π/3, and RF signal 302 is received at antenna array system 300 with an AoA θ2 equal to π/6.

Figure 4 is a graphic illustration of AoA or AoD measurement sensitivity to measured phase difference of RF signal samples used to calculate AoA or AoD. Figure 4 illustrates a graph 400 of arccos(x), where $x = \frac{\lambda(\varphi_2-\varphi_1)}{2\pi d}$, which is based on a measured value of phase difference of digital samples of the RF signal. Accordingly, graph 400 shows AoA or AoD measurement sensitivity to measured value of phase difference of digital samples of the RF signal.

As understood by those of skill in the art, sensitivity to measured phase difference is related to the slope of the curve of graph 4, which is equal to $\frac{d}{dx}(arccos(x)) = -\frac{1}{\sqrt{1-x^2}}$. As illustrated, the slope of the curve of graph 400 is least when AoA or AoD is greater than π/4 and less than 3π/4 (region of interest). Accordingly, the sensitivity of AoA or AoD to measured phase difference values is lower if AoA or AoD is greater than π/4 and less than 3π/4 than if AoA or AoD is less than π/4 or greater than 3π/4. Additionally, the sensitivity of AoA or AoD to measured phase difference values is minimum if AoA or AoD is equal to π/2.

Accordingly, if the array system 300 of figure 3 is used to calculate AoA for first and second received RF signals 301 and 302, the AoA calculated for first RF signal 301 is less sensitive to phase measurement errors than the AoA calculated for second RF signal 302, because AoA θ1 (equal to π/3) is closer to π/2 than AoA θ2 (equal to π/6).

As understood by those of skill in the art, the principles discussed with reference to figures 3 and 4 regarding sensitivity of AoA calculations to measured phase difference values, analogously apply to sensitivity of AoD calculations to measured phase difference values.

Figure 5 is a graphic illustration of a two array antenna system 500 which may be used to calculate AoA for first and second received RF signals 501 and 502. As illustrated, first RF signal 501 is received at Array 1 of antenna array system 500 with an AoA θ1 equal to π/3, and second RF signal 502 is received at Array 1 antenna array system 500 with an AoA θ3 equal to π/6. Furthermore, second RF signal 502 is received at Array 2 of antenna array system 500 with an AoA θ4 equal to π/3, and first RF signal 501 is received at Array 2 antenna array system 500 with an AoA θ2 equal to π/6. In this embodiment, Array 1 is perpendicular to Array 2.

Accordingly, if the array system 500 is used to calculate AoA for the first RF signal 501, the AoA calculated for first RF signal 501 with antenna Array 1 is less sensitive to phase measurement errors than the AoA calculated for first RF signal 501 with antenna Array 2, because AoA θ1 for first RF signal 501 and Array 1 (equal to π/3) is closer to π/2 than AoA θ2 for first RF signal 501 and Array 2 (equal to π/6). Similarly, if the array system 500 is used to calculate AoA for the second RF signal 502, the AoA calculated for second RF signal 502 with antenna Array 2 is less sensitive to phase measurement errors than the AoA calculated for second RF signal 502 with antenna Array 1, because AoA θ4 for second RF signal 502 and Array 2 (equal to π/3) is closer to π/2 than AoA θ3 for second RF signal 502 and Array 1 (equal to π/6).

Accordingly, the array that is more perpendicular to the AoA is less sensitive to phase measurement errors than the array that is less perpendicular to the AoA.

As understood by those of skill in the art, the principles discussed with reference to figure 5 regarding sensitivity of AoA calculations to measured phase difference values, analogously apply to sensitivity of AoD calculations to measured phase difference values. Accordingly, the array that is more perpendicular to the AoD is less sensitive to phase measurement errors than the array that is less perpendicular to the AoD.

As illustrated, the antenna arrays of antenna array 500 are linear antennas. In some embodiments, antenna array 500 includes one or more additional linear arrays. The additional linear arrays may be angularly evenly spaced, or angularly evenly oriented, or may be angularly distributed evenly. For example, if antenna array 500 includes three arrays, the first array may oriented so as to be at 0°, the second array may oriented so as to be at 45° with respect to the first array, and the third array may oriented so as to be at 90° with respect to the first array. Similarly, if antenna array 500 includes four arrays, the first array may oriented so as to be at 0°, the second array may oriented so as to be at 30° with respect to the first array, the third array may oriented so as to be at 60° with respect to the first array, and the fourth array may oriented so as to be at 90° with respect to the first array.

In embodiments having more than two linear arrays, the array that is most perpendicular to the AoA or AoD is less sensitive to phase measurement errors than the arrays that are less perpendicular to the AoA or AoD.

Figure 6 is a flowchart illustrating a method 600 of calculating AoA or AoD based on data from first and second antenna arrays of an antenna array system, such as antenna array system 500. Method 600 may be performed, for example by a receiver circuit, such as receiver circuit 200.

At 610, one of the first and second antenna arrays of the antenna array system is selected by, for example, a controller of the receiver circuit. The selection may be made using any selection method.

At 620, phase data associated with the selected antenna array is collected and used to calculate AoA or AoD by, for example, a controller of the receiver circuit. For example, using methods discussed herein, AoA or AoD may be calculated by the controller based on phase data associated with the selected antenna array. Alternative methods of calculating AoA or AoD based on data associated with the selected antenna array may be used by the controller.

At 630, the controller determines whether the absolute value of the calculated AoA or AoD minus $\pi/2$ is less than or equal to $\pi/4$. The controller may use any method to make the determination.

If the controller determines that the absolute value of the calculated AoA or AoD minus $\pi/2$ is not less than or equal to $\pi/4$, at 640 the controller selects the other antenna array of the first and second antenna arrays, and the method returns to 620, where another value of AoA or AoD is calculated based on data associated with the selected other antenna array.

If the controller determines that the absolute value of the calculated AoA or AoD minus $\pi/2$ is less than or equal to $\pi/4$, at the optional 650, phase data associated with the selected antenna array is collected and used to calculate additional values of AoA or AoD by the controller. For example, using methods discussed herein, AoA or AoD may be calculated by the controller based on phase data associated with the selected antenna array. Alternative methods of calculating AoA or AoD based on data associated with the selected antenna array may be used by the controller.

In some embodiments, the controller calculates multiple values of AoA or AoD using the selected antenna and combines them to calculate an estimated value of AoA or AoD, for example by averaging the multiple values of AoA or AoD.

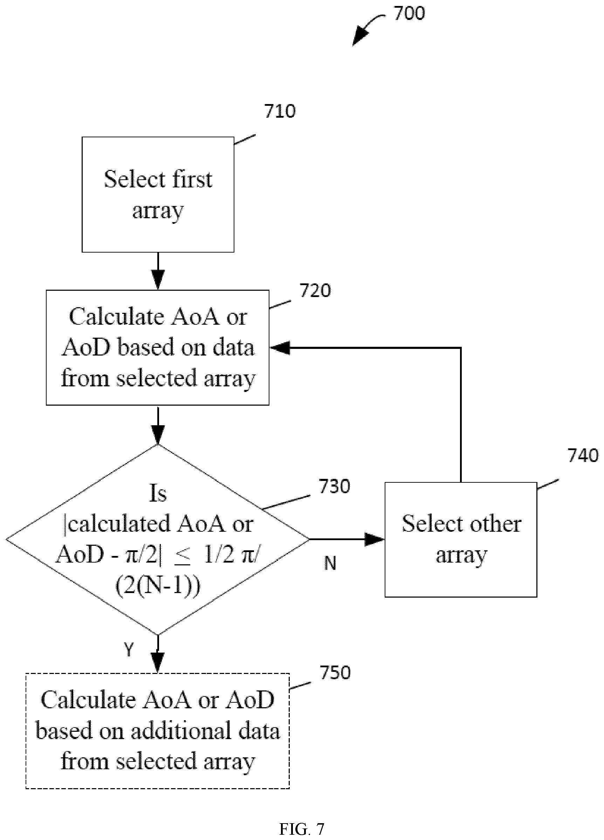

Figure 7 is a flowchart illustrating a method 700 of calculating AoA or AoD based on data from a number (N) of linear antenna arrays of an antenna array system, such as antenna array system 500. In some embodiments, the N linear arrays are angularly distributed evenly. For example, the linear antenna arrays may be angularly spaced by an angle of 90°/(N-1). Method 700 may be performed, for example by a receiver circuit, such as receiver circuit 200.

At 710, one of the N antenna arrays of the antenna array system is selected by, for example, a controller of the receiver circuit. The selection may be made using any selection method.

At 720, phase data associated with the selected antenna array is collected and used to calculate AoA or AoD by, for example, a controller of the receiver circuit. For example, using methods discussed herein, AoA or AoD may be calculated by the controller based on phase data associated with the selected antenna array. Alternative methods of calculating AoA or AoD based on data associated with the selected antenna array may be used by the controller.

At 730, the controller determines whether the absolute value of the calculated AoA or AoD minus $\pi/2$ is less than or equal to $1/2\ \pi/(2(N-1))$. The controller may use any method to make the determination.

If the controller determines that the absolute value of the calculated AoA or AoD minus $\pi/2$ is not less than or equal to $1/2\ \pi/(2(N-1))$, at 740 the controller selects a different antenna array of the antenna arrays, and the method returns to 720, where another value of AoA or AoD is calculated based on data associated with the selected other antenna array.

If the controller determines that the absolute value of the calculated AoA or AoD minus $\pi/2$ is less than or equal to $1/2\ \pi/(2(N-1))$, at the optional 750, phase data associated with the selected antenna array is collected and used to calculate additional values of AoA or AoD by the controller. For example, using methods discussed herein, AoA or AoD may be calculated by the controller based on phase data associated with the selected antenna array. Alternative methods of calculating AoA or AoD based on data associated with the selected antenna array may be used by the controller.

In some embodiments, the controller calculates multiple values of AoA or AoD using the selected antenna and combines them to calculate an estimated value of AoA or AoD, for example by averaging the multiple values of AoA or AoD.

In the descriptions above and in the claims, phrases such as "at least one of" or "one or more of" may occur followed by a conjunctive list of elements or features. The term "and/or" may also occur in a list of two or more elements or features. Unless otherwise implicitly or explicitly contradicted by the context in which it used, such a phrase is intended to mean any of the listed elements or features individually or any of the recited elements or features in combination with any of the other recited elements or features. For example, the phrases "at least one of A and B;" "one or more of A and B;" and "A and/or B" are each intended to mean "A alone, B alone, or A and B together." A similar interpretation is also intended for lists including three or more items. For example, the phrases "at least one of A, B, and C;" "one or more of A, B, and C;" and "A, B, and/or C" are each intended to mean "A alone, B alone, C alone, A and B together, A and C together, B and C together, or A and B and C together." Use of the term "based on," above and in the claims is intended to mean, "based at least in part on," such that an unrecited feature or element is also permissible.

The subject matter described herein can be embodied in systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and subcombinations of the disclosed features and/or combinations and subcombinations of several further features disclosed above. In addition, the logic flows depicted in the accompanying figures and/or described herein do not necessarily require the particular order shown, or sequential order, to achieve desirable results. Other implementations may be within the scope of the following claims.

**Claims**

1. A receiver circuit (200), comprising:

   one or more receiver antennas (210) or one or more receiver antenna arrays (210) configured to receive a plurality of RF signals transmitted from a transmitter circuit (100) comprising one or more transmit antennas (110) or one or more transmit antenna arrays (110);
   one or more RF chains configured to generate a plurality of digitized samples of the received RF signals; and
   a controller (240) configured to select at least one of a particular receiver antenna array and a particular transmit antenna array, and to at least one of:

      calculate a first angle of arrival, AoA, based on digitized samples of RF signals from the selected particular receiver antenna array, and
      calculate a first angle of departure, AoD, based on digitized samples of RF signals from the selected particular transmit antenna array,

   wherein the controller (240) is further configured to at least one of:

      determine whether the absolute value of the first AoA minus $\pi/2$ is less than or equal to an AoA threshold angle, and
      determine whether the absolute value of the first AoD minus $\pi/2$ is less than or equal to an AoD threshold angle,

   wherein the controller (240) is further configured to, in response to the absolute value of the first AoA minus $\pi/2$ not being less than or equal to the AoA threshold angle:

      select a different receiver antenna array, and
      calculate a second AoA based on digitized samples of RF signals from the selected different receiver antenna array, and

   wherein the controller (240) is further configured to, in response to the absolute value of the first AoD minus $\pi/2$ not being less than or equal to the AoD threshold angle:

      select a different transmit antenna array, and
      calculate a second AoD based on digitized samples of RF signals from the selected different transmit antenna array.

2. The receiver circuit (200) of claim 1, wherein the AoD threshold angle is equal to $1/2\,\pi/(2(N-1))$, wherein N is equal to the number of transmit antenna arrays of the transmitter circuit, and wherein the AoA threshold angle is equal to $1/2\,\pi/(2(M-1))$, wherein M is equal to the number of receiver antenna arrays of the receiver circuit.

3. The receiver circuit (200) of claim 2, wherein N=2; and/or M=2.

4. The receiver circuit (200) of claim 2, wherein at least one of N and M is greater than 2.

5. The receiver circuit (200) of any one of claims 1 to 4, wherein the controller (240) is further configured to, in response to the absolute value of the first AoA minus $\pi/2$ not being less than or equal to the AoA threshold angle:

   determine whether the absolute value of the second AoA minus $\pi/2$ is less than or equal to the AoA threshold angle; and
   in response to the absolute value of the second AoA minus $\pi/2$ being less than or equal to the AoA threshold angle, calculate an estimated AoA based on the second AoA;

wherein calculating the estimated AoA based on the second AoA comprises calculating one or more additional AoAs based on digitized samples of RF signals from the selected different receiver antenna array, and calculating the estimated AoA based on an average of the second and the additional AoAs.

**6.** The receiver circuit (200) of any one of claims 1 to 5, wherein the controller (240) is further configured to, in response to the absolute value of the first AoD minus $\pi/2$ not being less than or equal to the AoD threshold angle:

determine whether the absolute value of the second AoD minus $\pi/2$ is less than or equal to the AoD threshold angle; and

in response to the absolute value of the second AoD minus $\pi/2$ being less than or equal to the AoD threshold angle, calculate an estimated AoD based on the second AoD;

wherein calculating the estimated AoD based on the second AoD comprises calculating one or more additional AoDs based on digitized samples of RF signals from the selected different transmit antenna array, and calculating the estimated AoD based on an average of the second and the additional AoDs.

**7.** The receiver circuit (200) of any one of claims 1 to 6, determining whether the absolute value of the first AoA minus $\pi/2$ is less than or equal to the AoA threshold angle comprises determining whether the particular receiver antenna array is more perpendicular to the transmitter circuit (100) than any other receiver antenna array of the receiver circuit (200), and wherein determining whether the absolute value of the first AoD minus $\pi/2$ is less than or equal to the AoD threshold angle comprises determining whether the particular transmit antenna array is more perpendicular to the receiver circuit (200) than any other transmit antenna array of the transmitter circuit (100).

**8.** A method (600, 700) of using a receiver circuit (200), the method (600, 700) comprising:

with one or more receiver antennas (210) or one or more receiver antenna arrays (210), receiving a plurality of RF signals transmitted from a transmitter circuit (100) comprising one or more transmit antennas (110) or one or more transmit antenna arrays (110);

with one or more RF chains, generating a plurality of digitized samples of the received RF signals; and

with a controller (240), selecting (610, 710) at least one of a particular receiver antenna array and a particular transmit antenna array, and at least one of:

calculating (620, 720) a first angle of arrival, AoA, based on digitized samples of RF signals from the selected particular receiver antenna array, and

calculating (620, 720) a first angle of departure, AoD, based on digitized samples of RF signals from the selected particular transmit antenna array;

with the controller (240), at least one of:

determining (630, 730) whether the absolute value of the first AoA minus $\pi/2$ is less than or equal to an AoA threshold angle, and

determining (630, 730) whether the absolute value of the first AoD minus $\pi/2$ is less than or equal to an AoD threshold angle;

with the controller (240), in response to the absolute value of the first AoA minus $\pi/2$ not being less than or equal to the AoA threshold angle:

selecting (640, 740) a different receiver antenna array, and

calculating (620, 720) a second AoA based on digitized samples of RF signals from the selected different receiver antenna array; and

with the controller (240), in response to the absolute value of the first AoD minus $\pi/2$ not being less than or equal to the AoD threshold angle:

selecting (640, 740) a different transmit antenna array, and

calculating (620, 720) a second AoD based on digitized samples of RF signals from the selected different transmit antenna array.

9.  The method (600, 700) of claim 8, wherein the AoD threshold angle is equal to 1/2 $\pi/(2(N-1))$, wherein N is equal to the number of transmit antenna arrays of the transmitter circuit, and wherein the AoA threshold angle is equal to 1/2 $\pi/(2(M-1))$, wherein M is equal to the number of receiver antenna arrays of the receiver circuit.

10. The method (600, 700) of claim 9, wherein N=2; and/or M=2.

11. The method (600, 700) of claim 9, wherein at least one of N and M is greater than 2.

12. The method (600, 700) of any one of claims 8 to 11, further comprising, with the controller (240), in response to the absolute value of the first AoA minus $\pi/2$ not being less than or equal to the AoA threshold angle:

    determining (630, 730) whether the absolute value of the second AoA minus $\pi/2$ is less than or equal to the AoA threshold angle; and
    in response to the absolute value of the second AoA minus $\pi/2$ being less than or equal to the AoA threshold angle, calculating (650,750) an estimated AoA based on the second AoA.

13. The method (600, 700) of claim 12, wherein calculating (650,750) the estimated AoA based on the second AoA comprises calculating one or more additional AoAs based on digitized samples of RF signals from the selected different receiver antenna array, and calculating the estimated AoA based on an average of the second and the additional AoAs.

14. The method (600, 700) of any one of claims 8 to 13, further comprising, with the controller (240), in response to the absolute value of the first AoD minus $\pi/2$ not being less than or equal to the AoD threshold angle:

    determining (630, 730) whether the absolute value of the second AoD minus $\pi/2$ is less than or equal to the AoD threshold angle; and
    in response to the absolute value of the second AoD minus $\pi/2$ being less than or equal to the AoD threshold angle, calculating (650, 750) an estimated AoD based on the second AoD;
    wherein calculating (650, 750) the estimated AoD based on the second AoD comprises calculating one or more additional AoDs based on digitized samples of RF signals from the selected different transmit antenna array, and calculating the estimated AoD based on an average of the second and the additional AoDs.

15. The method (600, 700) of any one of claims 8 to 14, wherein determining (630, 730) whether the absolute value of the first AoA minus $\pi/2$ is less than or equal to the AoA threshold angle comprises determining whether the particular receiver antenna array is more perpendicular to the transmitter circuit (100) than any other receiver antenna array of the receiver circuit (200), and wherein determining (630, 730) whether the absolute value of the first AoD minus $\pi/2$ is less than or equal to the AoD threshold angle comprises determining whether the particular transmit antenna array is more perpendicular to the receiver circuit (200) than any other transmit antenna array of the transmitter circuit (100).

EP 3 974 859 A2

FIG. 1A

FIG. 1B

14

FIG. 2A

FIG. 2B

FIG. 3

FIG. 4

FIG. 5

610

600

Select first array

620

Calculate AoA or AoD based on data from selected array

640

630

Is |calculated AoA or AoD - π/2| ≤ π/4

N

Select other array

Y

650

Calculate AoA or AoD based on additional data from selected array

FIG. 6

700

710

Select first
array

Calculate AoA or
AoD based on data
from selected array
720

Is
|calculated AoA or
AoD - π/2| ≤ 1/2 π/
(2(N-1))
730

N

Select other
array
740

Y

Calculate AoA or AoD
based on additional data
from selected array
750

FIG. 7